# EUROPEAN PATENT SPECIFICATION

(11) **EP 2 294 760 B1**
(45) Date of publication and mention of the grant of the patent: **04.03.2020**
(21) Application number: 09777736.1
(22) Date of filing: 07.08.2009
(51) Int. Cl.: H04L 12/24

(54) **A METHOD FOR MANAGING A NETWORK AND A NETWORK**
VERFAHREN ZUR VERWALTUNG EINES NETZWERKS UND NETZWERK
PROCÉDÉ DE GESTION D'UN RÉSEAU ET RÉSEAU

(30) Priority: 07.08.2008 EP 08014134
(43) Date of publication of application: 16.03.2011
(73) Proprietor: NEC Corporation, Tokyo 108-8001 (JP)
(72) Inventor: DUDKOWSKI, Dominique, 69121 Heidelberg (DE); NUNZI, Giorgio, 69115 Heidelberg (DE); MINGARDI, Chiara, 36100 Vicenza (IT); BRUNNER, Marcus, 69181 Leimen (DE)
(74) Representative: Patent- und Rechtsanwälte Ullrich & Naumann
(86) International application number: PCT/EP2009/005740
(87) International publication number: WO 2010/015411

(56) References cited:
- EP-A- 1 150 454
- WO-A-02/23817
- DE-B3-102004 036 259
- US-A- 5 438 680

## Description

The present invention relates to a method for managing a network, according to claim 1, and to a network, according to claim 12.

Particularly, the present invention relates to a distributed architecture of network management which deals with putting network management functionality within the network. Within such networks the network elements do run the management functions. Thus, the management functions are not run externally by a management system as within many known networks.

For providing the distributed management functionality the relevant management functions communicate peer-to-peer with the same function on other elements or with other functions on the same or on other elements.

Such decentralized functions typically accumulate network management information from the network and must store and compute the information for analyzing the history. If all the network elements run those functions, all of them store information for later use of the management functions. Potentially, the functions do aggregate or run other calculations on it using CPU resources on the network element.

Some management functions are actually redundant in many situations. For example, if all neighbour network elements of one failed network element report an alarm to a central system, this is redundant; the function of checking neighbors for failures might only be needed in some neighbors but not in all of them.

On the other hand, having dynamic networks and network elements, the management information is likely to be not exact or not timely and the real-time view of the network is generally incomplete. Also certain higher level management tasks do not require very up-to-date management information or require only coarse-grained information.

Finally, cooperating decentralized control and management functions tend to converge to a synchronous behavior causing problems in resource usage peaks. For example, when all network elements export management information at the same time, a central sink may get overloaded.

In the area of traffic measurement, the idea of packet sampling has been used for reducing the management information amount. Or in order to enable capturing packets on high speed links with low cost only every n-th packet has been captured/or exported.

Further, from Encyclopedia of Optimiziation, C. A. Floudas and P. M. Pardalos, eds., vol. V, pp. 367-372, 2001. Kluwer, Dordrecht, author Jose Niño-Mora is known a stochastic scheduling. In the whole discipline the scheduling is done deterministic.

From "Random scheduling medium access for wireless ad hoc networks", Mergen, G., Tong, L., MILCOM 2002. Proceedings: Volume: 2, on page(s): 868-872 vol.2, 7-10 Oct. 2002, is known a random scheduling for medium access. This is a known way of removing a coordination function for decentralized medium access systems.

Finally, WO 2005/104437 A1 is showing packets scheduling with weighted randomness and WO 02/23817 A1 shows a method for managing a network and an according network including a plurality of network elements.

It is an object of the present invention to improve and further develop a method for managing a network and an according network for reducing resource consumption and network traffic.

In accordance with the invention, the afore mentioned object is accomplished by a method as defined in independent claim 1.

Further, the afore mentioned object is accomplished by a network as defined in independent claim 12.

Exemplary embodiments are described in the following to illustrate the invention. According to the invention it has been recognized that in many cases it will not be necessary to run certain management functions on all network elements. In many cases the management functions are redundant. Thus, it is proposed to randomly activate and deactivate the at least one management function on one or more of the network elements by a randomization process. In this case the at least one management function is activated on one or on some network elements and deactivated on the remaining network elements. This will result in a significant reduction of resource consumption and network traffic incurred for example by redundant execution of management functions.

Preferably, the activating and deactivating step is comprising turning on/off of the at least one management function. Such a turning on/off is a very simple way of activating and deactivating a management function. In this case the relevant management function is already installed and is only randomly turned on or off while the function continues to being installed.

Alternatively or additionally, the activating and deactivating step is comprising installing/removing of the at least one management function. In this case a certain management function is randomly installed for activation and removed for deactivation.

The activation of the at least one management function can be provided automatically or directly after the installing step. In other words, the at least one management function can be automatically or directly turned on after the installing step.

As an alternative the at least one management function can be turned on after the installing step via an additional step. Such an additional step is providing an additional control of the network management by a user.

Generally, the difference between the above turning on/off and the above installing/removing of the at least one management function would be the additional time for the installation, which is resulting in a longer time for activating the at least one management function.

Preferably, the at least one management function is comprising fault management including fault detection, prevention and/or healing. Alternatively or additionally the at least one management function could comprise performance management including monitoring and/or measurement. As a further alternative the at least one management function could comprise configuration management, specifically maintaining and/or changing a network configuration. However, the management functions are not limited to the above mentioned management functions.

With regard to a very effective management the at least one management function is communicating peer-to-peer with the same function on other network elements. In this regard, the at least one management function could further communicate peer-to-peer with another management function or other management functions on the same network element and/or on other network elements.

Preferably, the randomization process could be influenced through various factors and may be configured. With regard to a very effective randomization the randomization process comprises a probability distribution per management function and/or per network element. In the first alternative the management function is run according to the probability distribution of the randomization process on the network element. The other alternative will provide a randomization process, which is directed to the general activity of the network element. In other words, the network element can be activated or deactivated with regard to running of any management function.

In order to provide a very significant reduction of resource consumption the probability distribution could be dependent on a predeterminable configuration and/or management function type and is dependent on internal and/or external information. In other words, the probability distribution can be customized with regard to the individual management function and is customized with regard to internal and/or external parameters.

Preferably, the probability distribution could be exponentially distributed. This will result in a very sensitive activating and deactivating of a certain management function.

With respect to a very flexible method for managing a network the randomization process for the at least one or a certain management function could be interrupted during a time interval i. Such a time interval i could denote the interval between running the randomization process for a certain or for all management functions. Also such an interval i could be dependent on a predeterminable configuration and/or management function type and/or internal and/or external information. Thus, the interval i can be dependent on parameters which are identical or comparable to the parameters which could influence the above probability distribution of the randomization process.

Preferably, the interval i could be fixed, dynamic or random. The characteristics of the interval i could be dependent on the individual situation of a network to be managed.

In other words, the randomness of the interval i could be influenced by internal, external and/or configuration information or by a probability distribution.

With regard to a very effective method for managing a network the information for influencing the randomness of the interval i or the above mentioned probability distributions comprises the amount of available free storage of a certain network element, wherein the randomization function is dependent on the amount of free storage. If there is a lot of free storage available within a certain network element, the likelihood of turning the management function on could be very high. Thus, for management functions requiring storage for running, such as measurement/monitoring functions, the likelihood or probability of running of those functions could depend on the locally available storage. Preferably, in this case the probability distribution is not normally distributed, but rather exponentially, meaning that as long as the storage is fairly empty the likelihood to run the function is very high, but after a certain time period or depending on the amount of available free storage the likelihood could further increase very fast.

Generally, the randomization process may be run several times. So the activation and deactivation of functions might change.

Alternatively or additionally the at least one management function or the management functions themselves might have a probabilistic behaviour within itself. With regard to an easy configuration of such a behaviour the at least one management function or the management functions could have an interface to configure a probability distribution into the functions. For achieving a certain management goal, for example, the precision of management information exported by the function could be determined. Those values might need to be changed from an external component dependent on the individual circumstances of the running of the network. In a preferred embodiment the probability distribution could depend on the activity level or the CPU usage of the management function or management functionality. When a function or a functionality uses a lot of CPU capacity without reading values or writing values, the assumption is this function of functionality might be run less often. The probability that such a function is run could be set to be lower.

For example, a probability might depend on the management function or functionality to be activated and deactivated. If this function or functionality is operationally very critical, it must be run with high probability. If the function or functionality is less important it can be set to a lower probability.

If the output parameters of the function or functionality are fairly similar across all the same functions or functionalities on different network elements, there is a high chance that those are very redundant, and the probability can be set lower.

Another example is the case of monitoring a neighbor for failing or misbehaving. In that case the information on how many neighbors do already monitor a network element is relevant for deciding the probability of a network element for also adding a neighbour monitoring function. In this case there is some cooperation between the randomization processes of the network elements useful.

Generally, it has to be noted that with "random" is also specified any type of pseudo random processes, such processes being used frequently in today's technology instead of real random generators that require explicit and more complex technology.

The present invention has nothing to do with classical process scheduling, since the job or task is not even there to be scheduled if it is turned off or deactivated. Also the scheme does not optimize the resource scheduling, rather the overall system performance across the whole network. Additionally a process scheduling method uses certain priority rules as objectives, whereas the current patent assumes probability weights.

The method and the network according to the present invention do not care about optimal scheduling of jobs on a resource, but don't schedule a job at all. Additionally, according to the present invention no states about the job are stored.

Especially within large dynamic networks, which do not allow for an exact real-time view anyway, randomization of management functions does not impair the performance of the networks. Within the present invention is provided an introduction of a dedicated randomization component. Further, the influence of other parameters is considered within the randomization process. Within the invention is provided a significant reduction of resource consumption and network traffic incurred by redundant execution of management functions, such as monitoring, as compared to non-randomized function execution. There is provided a reduction of overall resource usage in the network with reduced management functionality. The invention is contributing to better reaction to network dynamics. There is realized a desynchronization of management functions through randomization and a network-wide resource decrease for management tasks without coordination.

One further advantage of the present invention is the prevention of redundancy in gathering and processing network management information.

The invention allows for resource efficient decentralized network management and equal or better management in dynamic network environments. A better desynchronization of network management activities is provided. The adaptation of the mechanisms through setting probabilities is depending on functions type, environment and activity level of the management function, for example.

There are several ways how to design and further develop the teaching of the present invention in an advantageous way. To this end, it is to be referred to the claims dependent from claim 1 on the one hand, and to the following explanation of preferred examples of embodiments illustrated by the drawing on the other hand. In connection with the explanation of the preferred examples of embodiments by the aid of the drawing, generally preferred embodiments and further developments of the teaching will be explained. In the drawings
- Fig. 1: is illustrating a general setting of a network with management functions embedded within network elements,
- Fig. 2: is schematically illustrating a network element of a decentrally managed network,
- Fig. 3: is illustrating two network elements with a probability control and
- Fig. 4: is illustrating the relationship between CPU usage and configuration actions per function.

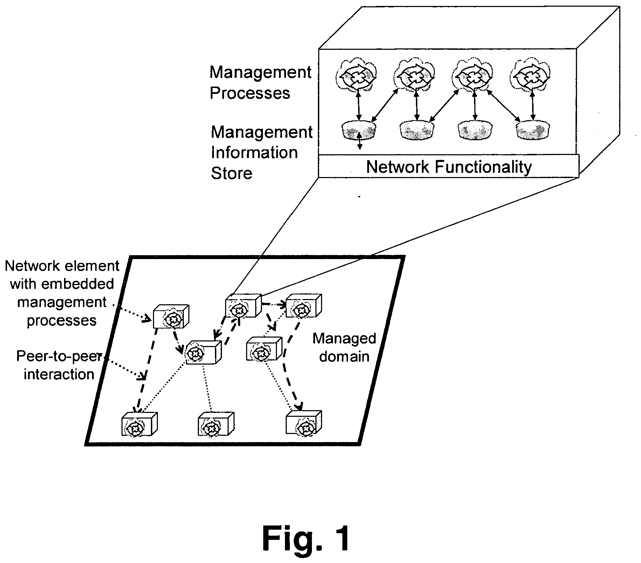

Fig. 1 is illustrating a general setting of a network which can be used for carrying out the method for managing a network according to the invention. The network is including a plurality of network elements with embedded management functions or processes. The functions communicate peer-to-peer with the same function on other network elements. Decentralized management functions typically accumulate network management information from the network within a store. The information has to be computed for analyzing the history. The inventive method for managing a network is characterized by randomly activating and deactivating at least one management function on one or more of the network elements by a randomization process.

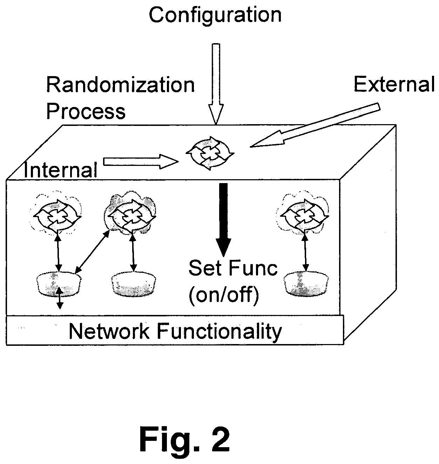

Fig. 2 is schematically illustrating a network element. By the randomization process the management function can be set on/off. An according probability distribution can be dependent on configuration, function type and internal and/or external information. Example inputs are free available storage within the network elements. If the amount of available storage is large the likelihood of turning the function in an active state is high.

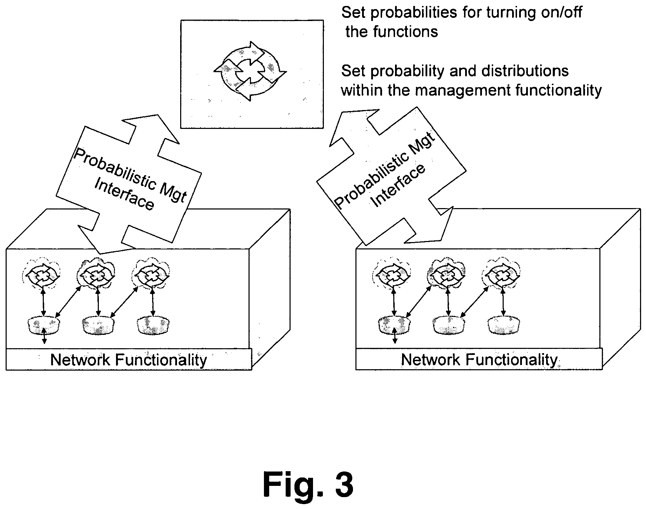

Fig. 3 is illustrating two network elements having an interface to configure probability distributions into the management function. The term "Mgt" is the short form for the term "Management". The probability might depend on the activity level of management functionality or management functions. When a function uses a lot of CPU without reading values or writing values, the assumption is that this function might be run less often. The probability for running such a function is set to be lower.

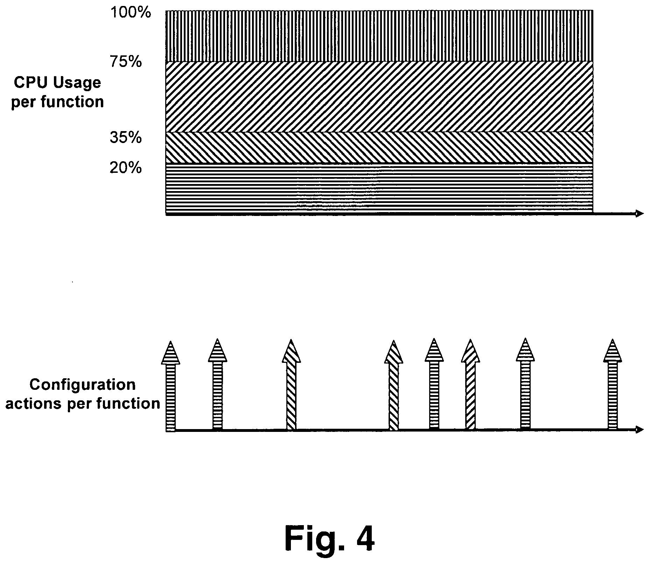

Fig. 4 is illustrating the relationship between CPU usage and configuration actions per function. Particularly, the relationship between CPU usage and configuration actions is not in relation. Thus, a change of such a functions probability to run can be foreseen. The upper function in Fig. 4 - indicated by the vertical line shading - is using 25% of the CPU, but does not have any write operation. Therefore, the likelihood of the upper - i.e. vertical line shaded - function for running can be lowered. This results in a reduction of CPU usage on the long run (not in timeframes of the decision). But that does not say anything about the short time scale scheduling of the functions.

For example, the probability might depend on the functionality or function to be activated or deactivated. If this functionality or function is operationally very critical, it must be run with high probability. If the function is less important it can be set to a lower probability.

The lower function in Fig. 4 - indicated by the horizontal line shading - is using 20% of the CPU and has many write operations. Thus, the probability for running this function can be set on a higher level than the level of the upper function in Fig. 4.

Many modifications and other embodiments set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for managing a network, the network including: a plurality of network elements, each of which being able to run at least one network management function and to store management information being necessary for running the at least one management function, the method being performed by one or more network elements of the plurality of network elements and the method comprising:
randomly activating and deactivating the at least one management function on each of the one or more network elements by a randomization process being performed by the network element,
wherein the randomization process comprises a probability distribution per management function and/or per network element,
wherein the probability distribution is dependent on internal and/or external information, said information comprising the amount of available free storage of the one or more network elements, and wherein the randomization process is dependent on said amount of available free storage.

2. A method according to claim 1, wherein the activating and deactivating step is comprising turning on/off of the at least one management function.

3. A method according to claim 1 or 2, wherein the activating and deactivating step is comprising installing/removing of the at least one management function,
wherein preferably the at least one management function is automatically or directly turned on after the installing step or
wherein preferably the at least one management function is turned on after the installing step via an additional step.

4. A method according to one of claims 1 to 3, wherein the at least one management function is comprising fault management including fault detection, prevention and/or healing and/or
wherein the at least one management function is comprising performance management including monitoring and/or measurement.

5. A method according to one of claims 1 to 4, wherein the at least one management function is comprising configuration management, specifically maintaining and/or changing a network configuration.

6. A method according to one of claims 1 to 5, wherein the at least one management function is communicating peer-to-peer with the same function on other network elements.

7. A method according to one of claims 1 to 6, wherein the at least one management function is communicating peer-to-peer with another management function or other management functions on the same network element and/or on other network elements.

8. A method according to one of claims 1 to 7, wherein the randomization process for the at least one or a certain management function is interrupted during a time interval i,
wherein preferably the interval i is dependent on a predeterminable configuration and/or management function type and/or internal and/or external information.

9. A method according to claim 8, wherein the interval i is fixed, dynamic or random,
wherein preferably the randomness of the interval i is influenced by internal, external and/or configuration information or by a probability distribution.

10. A method according to one of claims 1 to 9, wherein the at least one management function has a probabilistic behaviour within itself,
wherein preferably the at least one management function has an interface to configure a probability distribution into the function.

11. A method according to one of claims 1 to 10, wherein the probability distribution is depending on the activity level or the CPU usage of the management function or management functionality.

12. A network including: a plurality of network elements, each of which being adapted to run at least one network management function and to store management information being necessary for running the at least one management function, wherein one or more network elements of the plurality of network elements are adapted to perform a method according to any one of claims 1 to 11.

## Patentansprüche

1. Verfahren zum Managen eines Netzwerks, wobei das Netzwerk umfasst: eine Vielzahl von Netzwerkelementen, von denen jedes in der Lage ist, mindestens eine Netzwerkmanagementfunktion auszuführen und Managementinformation zu speichern, die zum Ausführen der mindestens einen Managementfunktion erforderlich ist, wobei das Verfahren von einem oder mehreren Netzwerkelementen der Vielzahl von Netzwerkelementen ausgeführt wird und das Verfahren umfasst:
zufälliges Aktivieren und Deaktivieren der mindestens einen Managementfunktion auf jedem des einen oder der mehreren Netzwerkelemente durch einen Randomisierungsprozess, der von dem Netzwerkelement durchgeführt wird,
wobei der Randomisierungsprozess eine Wahrscheinlichkeitsverteilung pro Managementfunktion und/oder pro Netzwerkelement umfasst,
wobei die Wahrscheinlichkeitsverteilung von interner und/oder externer Information abhängt, wobei die Information die Menge an verfügbarem freiem Speicher des einen oder der mehreren Netzwerkelemente umfasst und wobei der Randomisierungsprozess von der Menge an verfügbarem freiem Speicher abhängt.

2. Verfahren nach Anspruch 1, wobei der Aktivierungs- und Deaktivierungsschritt ein Ein-/Ausschalten der mindestens einen Managementfunktion umfasst.

3. Verfahren nach Anspruch 1 oder 2, wobei der Aktivierungs- und Deaktivierungsschritt ein Installieren/Entfernen der mindestens einen Managementfunktion umfasst,
wobei vorzugsweise die mindestens eine Managementfunktion automatisch oder direkt nach dem Installationsschritt eingeschaltet wird oder
wobei vorzugsweise die mindestens eine Managementfunktion nach dem Installationsschritt über einen zusätzlichen Schritt eingeschaltet wird.

4. Verfahren nach einem der Ansprüche 1 bis 3, wobei die mindestens eine Managementfunktion ein Fehlermanagement einschließlich Fehlererkennung, -vermeidung und/oder -heilung umfasst und/oder
wobei die mindestens eine Managementfunktion ein Leistungsmanagement einschließlich Überwachung und/oder Messung umfasst.

5. Verfahren nach einem der Ansprüche 1 bis 4, wobei die mindestens eine Managementfunktion ein Konfigurationsmanagement, insbesondere die Wartung und/oder Änderung einer Netzwerkkonfiguration, umfasst.

6. Verfahren nach einem der Ansprüche 1 bis 5, wobei die mindestens eine Managementfunktion mit der gleichen Funktion auf anderen Netzwerkelementen peer-to-peer kommuniziert.

7. Verfahren nach einem der Ansprüche 1 bis 6, wobei die mindestens eine Managementfunktion mit einer anderen Managementfunktion oder anderen Managementfunktionen auf dem gleichen Netzwerkelement und/oder auf anderen Netzwerkelementen peer-to-peer kommuniziert.

8. Verfahren nach einem der Ansprüche 1 bis 7, wobei der Randomisierungsprozess für die mindestens eine oder eine bestimmte Managementfunktion während eines Zeitintervalls i unterbrochen wird,
wobei vorzugsweise das Intervall i von einer vorherbestimmbaren Konfiguration und/oder einem Typ der Managementfunktion und/oder interner und/oder externer Information abhängig ist.

9. Verfahren nach Anspruch 8, wobei das Intervall i fest, dynamisch oder zufällig ist,
wobei vorzugsweise die Zufälligkeit des Intervalls i durch interne, externe und/oder Konfigurationsinformation oder durch eine Wahrscheinlichkeitsverteilung beeinflusst wird.

10. Verfahren nach einem der Ansprüche 1 bis 9, wobei die mindestens eine Managementfunktion ein probabilistisches Verhalten in sich selbst aufweist,
wobei vorzugsweise die mindestens eine Managementfunktion eine Schnittstelle zur Konfiguration einer Wahrscheinlichkeitsverteilung in die Funktion aufweist.

11. Verfahren nach einem der Ansprüche 1 bis 10, wobei die Wahrscheinlichkeitsverteilung von dem Aktivitätslevel oder der CPU-Nutzung der Managementfunktion oder Managementfunktionalität abhängt.

12. Ein Netzwerk, das umfasst: eine Vielzahl von Netzwerkelementen, von denen jedes so angepasst ist, dass es mindestens eine Netzwerk-Managementfunktion ausführt und Managementinformation speichert, die zum Ausführen der mindestens einen Managementfunktion erforderlich ist,
wobei ein oder mehrere Netzwerkelemente der Vielzahl von Netzwerkelementen zum Ausführen eines Verfahrens nach einem der Ansprüche 1 bis 11 angepasst sind.

## Revendications

1. Procédé pour la gestion d'un réseau, le réseau comprenant : une pluralité d'éléments de réseau, chacun d'eux étant capable d'exécuter au moins une fonction de gestion de réseau et de stocker des informations de gestion nécessaires pour l'exécution de l'au moins une fonction de gestion, ce procédé étant exécuté par un ou plusieurs éléments de réseau de la pluralité d'éléments de réseau et ce procédé comprenant :
l'activation et la désactivation aléatoire de l'au moins une fonction de gestion sur chacun des un ou plusieurs éléments de réseau par un processus de randomisation exécuté par l'élément de réseau,
le processus de randomisation présentant une distribution de probabilités par fonction de gestion et/ou par élément de réseau,
la distribution de probabilités dépendant d'informations internes et/ou externes, lesdites informations comprenant la quantité de stockage libre disponible de l'un ou des plusieurs éléments du réseau et le processus de randomisation dépendant de ladite quantité de stockage libre disponible.

2. Procédé selon la revendication 1, dans lequel l'étape d'activation et de désactivation comprend la mise en marche et l'arrêt de l'au moins une fonction de gestion.

3. Procédé selon la revendication 1 ou 2, dans lequel l'étape d'activation et de désactivation comprend l'installation/la suppression de l'au moins une fonction de gestion,
de préférence l'au moins une fonction de gestion étant mise en marche automatiquement ou directement après l'étape d'installation ou
de préférence l'au moins une fonction de gestion étant mise en marche après l'étape d'installation à l'aide d'une étape supplémentaire.

4. Procédé selon l'une des revendications 1 à 3, dans lequel l'au moins une fonction de gestion comprend une gestion de défaut comprenant une détection, une prévention et/ou une résolution de défaut et/ou
dans lequel l'au moins une fonction de gestion comprend une gestion de performance comprenant un monitoring et/ou une mesure.

5. Procédé selon l'une des revendications 1 à 4, dans lequel l'au moins une fonction de gestion comprend une gestion de défaut comprenant une gestion de configuration, plus spécifiquement le maintien et/ou la modification d'une configuration de réseau.

6. Procédé selon l'une des revendications 1 à 5, dans lequel l'au moins une fonction de gestion communique en peer-to-peer avec la même fonction sur d'autres éléments du réseau.

7. Procédé selon l'une des revendications 1 à 6, dans lequel l'au moins une fonction de gestion communique en peer-to-peer avec une autre fonction de gestion ou d'autres fonctions de gestion sur le même élément de réseau et/ou sur d'autres éléments du réseau.

8. Procédé selon l'une des revendications 1 à 7, dans lequel le processus de randomisation pour l'au moins une ou une fonction de gestion déterminée est interrompu pendant un intervalle de temps i,
de préférence l'intervalle i dépendant d'un type de fonction de configuration et/ou de gestion pouvant être prédéterminé et/ou d'informations internes et/ou externes.

9. Procédé selon la revendication 8, dans lequel l'intervalle i est fixe, dynamique ou aléatoire,
de préférence, le caractère aléatoire de l'intervalle i étant influencé par des informations internes, externes et/ou de configuration ou par une distribution de probabilités.

10. Procédé selon l'une des revendications 1 à 9, dans lequel l'au moins une fonction de gestion présente un comportement probabiliste en elle-même,
de préférence l'au moins une fonction de gestion présentant une interface pour configurer une distribution de probabilités dans la fonction.

11. Procédé selon l'une des revendications 1 à 10, dans lequel la distribution de probabilités dépend du niveau d'activité ou de l'usage de la CPU de la fonction de gestion ou de la fonctionnalité de gestion.

12. Réseau comprenant : une pluralité d'éléments de réseau, chacun d'eux étant conçu pour exécuter au moins une fonction de gestion de réseau et pour stocker des informations de gestion nécessaires pour l'exécution de l'au moins une fonction de gestion,
un ou plusieurs éléments de réseau de la pluralité d'éléments de réseau étant conçus pour exécuter un procédé selon l'une des revendications 1 à 11.
